# EUROPEAN PATENT SPECIFICATION

(11) **EP 3 642 507 B1**
(45) Date of publication and mention of the grant of the patent: **17.11.2021**
(21) Application number: 18739462.2
(22) Date of filing: 20.06.2018
(51) Int. Cl.: F16D 43/06

(54) **CLUTCH ASSEMBLY, IN PARTICULAR FOR MOTORCYCLES, AND TRANSMISSION SYSTEM EQUIPPED WITH SAID CLUTCH ASSEMBLY**
KUPPLUNGSANORDNUNG, INSBESONDERE FÜR MOTORRÄDER, UND MIT BESAGTER KUPPLUNGSANORDNUNG AUSGESTATTETES GETRIEBE
ENSEMBLE EMBRAYAGE, EN PARTICULIER POUR MOTOCYCLETTES, ET SYSTÈME DE TRANSMISSION ÉQUIPÉ DUDIT ENSEMBLE EMBRAYAGE

(30) Priority: 20.06.2017 IT 201700068135
(43) Date of publication of application: 29.04.2020
(73) Proprietor: Qooder S.A., 6833 Vacallo (CH)
(72) Inventor: MORONI, Marco, 21055 Gorla Minore (VA) (IT); MARABESE, Riccardo, 21013 Gallarate (VA) (IT)
(74) Representative: Savoca, Agatino
(86) International application number: PCT/EP2018/066425
(87) International publication number: WO 2018/234381

(56) References cited:
- WO-A1-2016/168069
- US-B1- 8 297 425

## Description

### FIELD OF THE INVENTION

The present invention relates to an innovative clutch, in particular but not exclusively, for motorcycles with two, three and four wheels, scooters, quads and similar vehicles. In particular, the present invention relates to a clutch assembly, particularly but not exclusively adapted to be used in transmission systems for vehicles of the aforesaid type, in particular in transmission systems with automatic variation of the speed, in particular of the transmission ratio. The present invention further relates to a transmission system, in particular but not exclusively with automatic transmission ratio variation, e.g. a CVT (Continuously Variable Transmission).

### BACKGROUND ART

The use of transmission systems with automatic transmission ratio variation is widespread in the field of motorcycles (but not only), in particular in the field of motorcycles with two, three and four wheels, of scooters, quads and similar vehicles; in particular, in the field of motorcycles of the aforesaid type, the use of continuously variable transmissions or CVTs is particularly popular (and appreciated by users).

Such a transmission is disclosed in WO 2016/168069 A1.

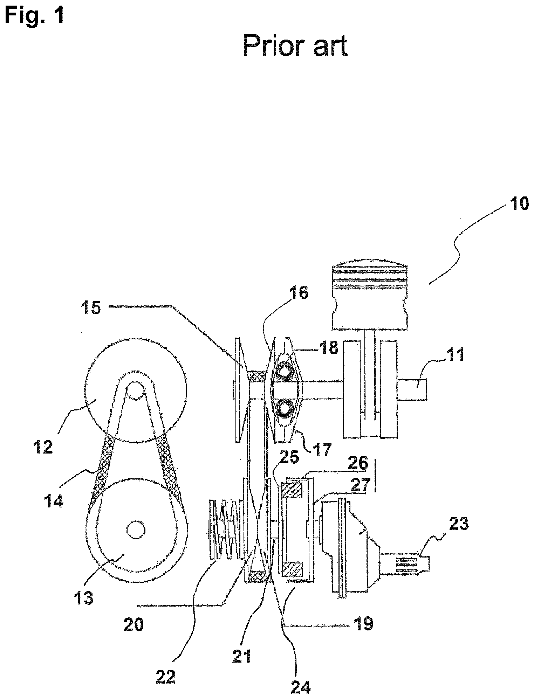

With reference to figure 1, the operation of a continuously variable transmission CVT can be summarized as follows.

The rotation of the drive shaft 11 deriving from the action of the engine 10, obviously results in the rotation of the drive pulley 12 (keyed onto the drive shaft 11) and of the driven pulley 13, the latter put into rotation by the drive belt 14, engaged both on the drive pulley 12 and the driven pulley 13. The situation in figure 1 is also the one in which the gear ratio (i.e. the ratio between the circumference of the drive pulley 12 and that of the driven pulley 13) is minimum and therefore corresponds to the shortest "gear"; the situation in figure 1 occurs with the engine 10 off or idling slowly. The drive pulley 12 also comprises a fixed half-pulley 15 (rigidly fixed to the drive shaft 11) and a movable half-pulley 16, in particular translatable along the drive shaft 11. A containment cap 17, which is also fixed, defines a space or housing with the movable half-pulley 16, in which "expansion" rollers 18, in variable number according to requirements and/or circumstances, are housed. In particular, said rollers 18 are can translate, in radial direction (perpendicularly to the shaft 11), where the outward translation (away from the shaft 11) of rollers 18 occurs by virtue of the action of the centrifugal force which acts on them when a predetermined rotation speed of the shaft 11 (and therefore of the pulley 12) is reached, the speed being higher than the one corresponding to the idling speed of the engine 10. The outward translation of the rollers 18 obviously results in a push on the half-pulley 16, which is thus translated along the drive shaft 11 (from the right leftwards with respect to Figure 1), whereby the rolling circumference of the belt 14 is varied (increased) in this manner on the two opposite half-pulleys 15 and 16 with conical surfaces. In practice, the belt 14 "moves up" towards the outside in the pulley 12.

The driven pulley 13 also consists of a fixed half-pulley 19 and a movable half-pulley 20 (translatable along the respective rotation shaft 21, whereby the half-pulley 20 thus moves gradually away from the half-pulley 19 as the rotation speed of the shaft 21 increases, thus decreasing the rolling circumference of the belt 14 on the half-pulleys 19 and 20; in practice, the belt 14 progressively "moves down" into the groove defined by the two mutually opposite half-pulleys 19 and 20 with conical surfaces. In practice, the maximum transmission ratio, corresponding to the longest gear, occurs with the belt positioned on the maximum rolling circumference of the pulley 12 and on minimum rolling circumference of the pulley 13. The translation of the half-pulley 20 away from the half-pulley 19 occurs against the elastic bias of the spring 22, whereby the semi pulley 20 is approached to the half pulley 19 by spring 22 (the half-pulley 21 is translated in the opposite direction, i.e. from the left rightwards with respect to Figure 1) as the rotation speed of the shaft 21 decreases (as a result of the reduction of rpm of the motor 10 and thus of the rotation speed of the drive shaft 11 and of the pulley 12); at the same time, the rollers 18 also retract towards the shaft 11, whereby the half-pulley 16 thus moves away again from half-pulley 15 (i.e. translates on the shaft 11 from the left rightwards with respect to Figure 1).

The transmissions of the type described above with reference to figure 1 allow a continual, automatic variation of the gear ratio, by modifying the transmission ratio between the drive pulley and the driven pulley indeed automatically and continuously, as explained, whereby the engine thus tends to remain at a given speed of operation. Furthermore, again as shown in figure 1, a clutch assembly 24, the operation of which can be summarized as follows, is interposed between the driven pulley 13 and the hub 23 (of a wheel, not shown).

A cap 25, which is then dragged into rotation by the shaft 21, is keyed on the shaft 21 of the driven pulley 13. The cap 25 is further equipped with a plurality of shoes 26 (variable in number according to requirements and/or circumstances), said shoes 26 being radially translatable outwards by virtue of the bias of the centrifugal force generated by the rotation of the cap 25. The progressive translation of the shoes 26 towards the outside of the cap 25 results in the progressive engagement of the bell 27 by the shoes 26 and thus in the mutual coupling of the cap 25 and of the bell 27, which is then dragged into rotation, where the rotation of the bell 27 results in the rotation of the shaft 23, and thus of the wheel.

Obviously, as the rpm of the engine 10, and thus of the pulley 13 and of the cap 25, decreases, the shoes 26 retract and so the decoupling of the bell 27 from the cap 25, and thus ultimately the decoupling of the shaft 23 from the transmission and from the engine 10, occurs.

The described clutch, said centrifuge (present in the driven pulley) thus allows disconnecting the engine automatically from the wheel when the engine is running at a speed close to idling speed and making it integral when such a rotation speed increases and avoids the need for a clutch lever; indeed, as explained, the clutch is of the centrifugal type and adheres to the clutch bell when a given rotation speed of the driven pulley is achieved.

Transmission-clutch systems or even only clutch assemblies of the described type, although appreciable from various points of view (e.g. high reliability and/or simplicity of construction and of use), are not however free from drawbacks and/or disadvantages that the present invention intends to remedy.

A first drawback relates to the fact that it is not possible to put the hub 23 and the respective wheel into rotation in the opposite direction and so to reverse the vehicle with the engine off or idling; indeed, even assuming one were to put the drive shaft 11 in reverse rotation, e.g. by using (through a suitable inverter) the motive energy of the current generator, the low speeds in play would not allow to the masses (at the shoes 26) of the clutch normally used, to expand and thus to transmit the motion from the transmission to the wheel, according to the methods described above. If the shoes 26 of the clutch 24 do not reach the rotational speed needed to expand them, and thus to couple them to the clutch bell 25, the rotation of the drive shaft 11 does not transmit the motion to the wheel because wheel and transmission are not mutually coupled: as this condition occurs when the drive shaft 11 is put into reverse rotation by using the current generator as a motive force by putting the rotor fixed to the drive shaft into rotation, it explains why the vehicle cannot be reversed.

A second drawback relates to the fact that with the engine off, and thus in decoupling condition between transmission and wheel, it is not possible to push-start the engine (e.g. in the case of flat battery), since the wheel rotation generated by the push is not transmitted to the engine.

### DESCRIPTION OF THE PRESENT INVENTION

It is the object of the present invention to overcome or at least minimize the drawbacks found in the solutions according to the prior art, in particular those summarized above with reference to figure 1.

In particular, it is an object of the present invention to suggest and provide a solution which allows reversing the vehicle with the engine off and/or push-starting the engine, e.g. in case of flat battery and/or of fault in the electrical system. Furthermore, according to the present invention, the objects above must be achieved by using a small number of component parts of simple construction which can be manufactured and assembled at a low cost.

The present invention is based on the general consideration that the vehicle can be reversed with the engine off and the engine can be push-started by means of a solution which allows:
the mutual automatic constraint between drive shaft and wheel with the engine off or running at very slow speed, either close to or slower than idle speed (idling speed being intended as the minimum turning speed useful to keep the engine running),
both in the case of reverse rotation of the drive shaft and in the case of rotation of the wheel in the travel direction, e.g. generated by pushing;
the mutual automatic release, with the engine on and at rpm sufficient to start the vehicle.

Given the purposes summarized above, as well as the drawbacks encountered in the prior art and finally the aforesaid considerations, the present invention relates to a clutch assembly, in particular for motorcycles, said clutch comprising a bell adapted to be engaged and disengaged alternatively by a rotating transmission component, where the mutual engagement of said bell and said rotating transmission component by means of a first engagement means results in said bell dragged in rotation by said transmission component in a first rotation direction, where said bell defines an engagement profile formed so as to be engaged and disengaged alternatively by second engagement means dragged in rotation by said transmission component, and where the mutual engagement of said second engagement means and said engagement profile is achieved as a result of both the rotation of said transmission component in a second rotation direction, opposite to said first rotation direction, and the rotation of said bell in said first rotation direction, whereas the mutual disengagement of said engagement means and said engagement profile is achieved as a result of both the rotation of said transmission component in said first rotation direction opposite to said second rotation direction, and the rotation of said bell in said second rotation direction.

According to the invention, said bell comprises a substantially cylindrical portion, where the engagement profile is defined by at least one portion of the outer surface of said substantially cylindrical portion.

According to an embodiment, said at least one substantially cylindrical portion of said bell comprises at least one depression with respect to a substantially cylindrical reference surface, said depression being subtended by a predefined angular sector centred on the longitudinal axis of said substantially cylindrical portion.

According to an embodiment, the outer surface of said at least one depression is the locus of the generatrix half-lines substantially parallel to the longitudinal axis of said substantially cylindrical portion.

According to an embodiment, the distance of said generatrix half-lines from said longitudinal axis of said substantially cylindrical portion varies within said angular sector.

According to an embodiment, the distance of said generatrix half-lines from said longitudinal axis of said substantially cylindrical portion varies continuously within said angular sector.

According to an embodiment, said angular sector comprises a first subsector and a second subsector, where in the second subsector the curve defined by the intersection between a plane perpendicular to the longitudinal axis of said substantially cylindrical portion and the external surface of said at least one depression comprises at least one concavity faced towards said cylindrical reference surface.

According to an embodiment, in said first subsector the curve defined by the intersection between a plane perpendicular to the longitudinal axis of said substantially cylindrical portion and the external surface of said at least one depression comprises at least one convexity faced towards said cylindrical reference surface.

According to an embodiment, said at least one concavity and at one convexity are connected in a continuous manner.

The present invention further relates to a transmission system, in particular for motorcycles, said system comprising a rotating transmission component, first engagement means and second engagement means and a bell adapted to be engaged and disengaged alternatively by said rotating transmission component, where the mutual engagement of said bell and said rotating transmission component by means of first engagement means, results in said bell being dragged in rotation by said transmission component in a first rotation direction, where said bell is a bell according to one of the preceding embodiments, and therefore in that the mutual engagement of said second engagement means and said engagement profile arises as a result of both the rotation of said transmission component in a second rotation direction opposite to the said first rotation direction, and the rotation of said bell in said first rotation direction, whereas the mutual disengagement of said second engagement means and said engagement profile arises as a result of both the rotation of said transmission component in said first rotation direction, opposite to said second rotation direction, and the rotation of the bell in said second rotation direction.

According to an embodiment, said transmission system, comprises a first pulley positioned outside said bell, and where said second engagement means comprises at least one pawl fixed to said first pulley and adapted to be switched between a first engagement position where it engages said at least one depression and a second disengagement position in which it is disengaged from said at least one depression, and where the switching of said at least one pawl from said first engagement position to said disengagement position arises as a result of both the rotation of said first pulley in said first rotation direction, and the rotation of said bell in said second rotation direction.

According to an embodiment, said at least one pawl is constrained to said first pulley so that it can be switched by rotation, where both the rotation of said first pulley in said first rotation direction, and the rotation of said bell in said second rotation direction result in said at least one pawl being put into rotation in a first own rotation direction and thus in it being switched from said first engagement position to said second engagement position.

According to an embodiment, said system comprises first elastic means interposed between said pulley and said at least one pawl, and where said at least one pawl is switched by rotation, in particular by centrifugal force of said at least one pawl from said engagement position to said second disengagement position against the elastic resistance applied by said first elastic means, whereas said at least one pawl is switched by rotation from said second engagement position to said first engagement position by virtue of the thrusting action applied by said first elastic means. According to an embodiment, said rotating transmission component comprises a second pulley or cap equipped with said first engagement means, said first engagement means comprising a plurality of back-pushing and/or engaging shoes at least partially housed inside said bell, where said shoes are adapted to be translated along a radial direction, and in that the rotation of said rotating component in said first rotation direction results in said shoes being radially translated, and thus in the mutual engagement of said second pulley and of said bell, and thus in said bell being dragged in rotation by said rotating transmission component.

According to an embodiment, said system comprises a continuously variable transmission (CVT), where said rotating transmission component belongs to the driven rotating component of said continuously variable transmission.

Further possible embodiments of the present invention are defined in the claims.

### BRIEF DESCRIPTION OF THE DRAWINGS

Hereinafter, the present invention will be explained by means of the following detailed description of the embodiments shown in the drawings. However, the present invention is not limited to the embodiments described hereinafter and shown in the drawings; on the contrary, all variants of the embodiments described below and shown in the drawings, which will become apparent to those skilled in the art, are within the scope of the invention.

In the drawings:
- figure 1 shows a diagrammatic view of a transmission-clutch system according to the prior art;
- figure 2 shows a perspective view of part of a transmission-clutch system according to an embodiment of the present invention;
- figure 3 shows a side view of a rotating part of a transmission-clutch system according to an embodiment of the present invention;
- figure 4 shows a perspective view of part of a system according to an embodiment of the present invention;
- figure 5 shows a perspective view of a system according to an embodiment of the present invention;
- figure 6 shows a diagrammatic view of constructional details of a system to an embodiment of the present invention.

### DETAILED DESCRIPTION OF THE PRESENT INVENTION

The present invention is particularly advantageously applied in case of transmission ratio automatic variation and/or continuous transmission systems, in particular in the case of CVTs; for this reason, hereinafter, the present invention will be explained with reference to its applications to continuously variable transmissions (CVTs). It is further worth noting that the possible applications of the present invention are not limited to continuously variable transmissions (CVTs) but include transmission systems of any kind.

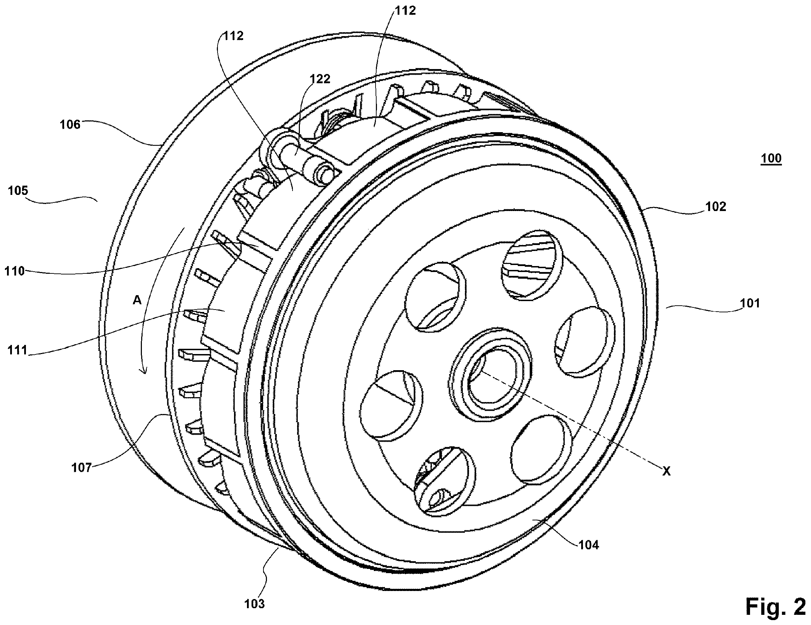

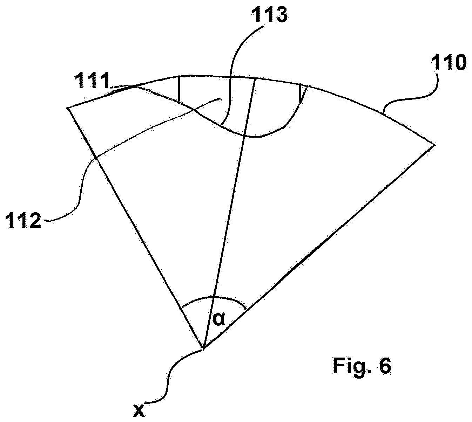

In figure 2, reference numeral 100 identifies a transmission-clutch system according to an embodiment of the present invention, where, for clarity reasons, only the parts essential for describing the system are shown in the figure. Reference numeral 101 identifies a clutch, said clutch 101 comprising a bell 102, which thus comprises a portion which is substantially cylindrical 103 and which extends from a flange 104 to which a wheel hub can be connected, according to substantially known methods (see the description of figure 1), normally by means of a gear final reduction. Moreover, in figure 2, reference numeral 105 identifies a driven pulley, in turn comprising a movable half-pulley 106 (again according to the methods described above) and a fixed half-pulley 107. Again according to substantially known methods, a cap integral in rotation with the half-pulley 107 is housed in the inner space defined by the cylindrical portion 103 of the bell 102 positioned facing the half-pulley 107, said cap (not shown in the figure) being equipped with back-pushing and/or engagement shoes (first engagement means) radially translatable (expandable) as a consequence of the centrifugal force generated by the rotation of the fixed half-pulley 107 and thus of the cap is housed in the substantially cylindrical portion 103 of the bell 102. Thus, assuming for clarity purposes that the half-pulley 107 is put into rotation by the vehicle engine in the rotation direction indicated by the arrow A, and that consequently the rotation direction indicated by the arrow A corresponds to the forward direction of the vehicle, the rotation of the half-pulley 107 in the direction of the arrow A, and therefore of the cap housed in the bell, with sufficient rotation speed, results in the engagement of the bell 102 by the expandable shoes, and thus in the rotation of the bell 102 in the same rotation direction A, and finally in rotation of the wheel hub and of the wheel itself in the same rotation direction A. Furthermore, the bell 102 has innovative features, as described below in detail with reference to figures 2 and 6.

As shown in the figures, with respect to a substantially cylindrical reference surface 110, the outer surface 111 of the cylindrical portion 103 comprises mutually contiguous recesses 112 each subtended by an angular sector α centred on the longitudinal symmetry axis X of the substantially cylindrical portion 103. The surface of each depression 112 may be defined as the locus of the generatrix half-lines parallel to the X axis, where the distance of said generating lines from the X axis varies as a function of the angular position, in particular from a maximum substantially corresponding to the radius of the reference surface 110 at the opposite ends of the angular sector α, to a minimum in intermediate position between the two extremes, where the minimum distance of the directrix of the X axis naturally corresponds to the maximum depth of the depression 112. Furthermore, and again as shown, the curvature of the outer surface 111 of each depression 112 is such that the curve defined by the intersection of the surface 111 with a reference plane perpendicular to the X axis (and therefore parallel to the plane of figure 6) is such as to comprise a concavity C1 facing towards the reference surface 110 on a first sub-sector α1, and a convexity C2 facing towards the reference surface 110 in a second sub-sector α2 of the angular sector α, where also the convexity C2 and the concavity C1 are joined continuously.

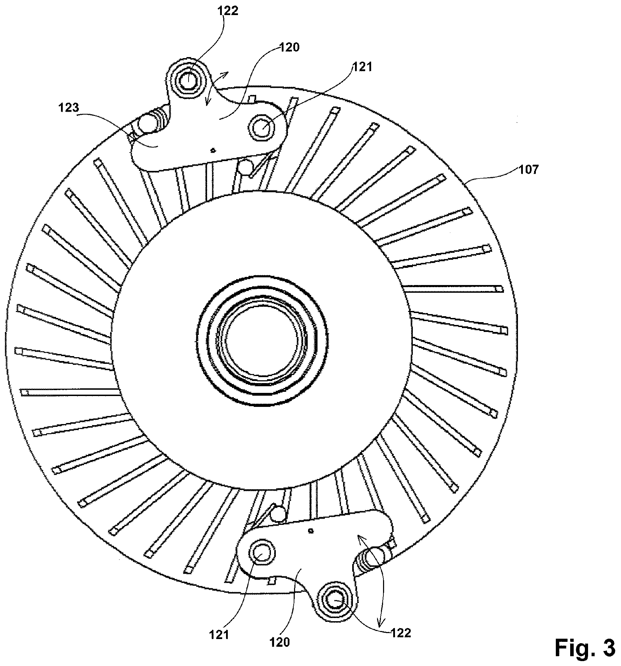

Further peculiarities of the present invention may be appreciated with reference to figures 3 and 2; indeed, as shown, on the driven half-pulley 107, and in particular on its inner face facing towards the bell 102, second engagement means 120 are applied, two in number in the example shown, where in all cases the number may vary from a minimum of one to a maximum corresponding to the number of depressions 112, according to requirements and/or circumstances. The constructional and functional features of engagement means or element 120 will be described below for brevity purposes. Each element 120 comprises a plate 123 substantially parallel to the half-pulley 107 and interposed between the pulley 107 and the bell 102, the plate 123 then being positioned outside the bell 102. The plate 123 is rotatably constrained to the half-pulley 107 by means of a constraint or pin 121, the plate 123 then being switchable by rotation about the pin 121 in the two opposite rotation directions indicated by the double arrow in figure 3. A pawl extends from the plate 123, which pawl is substantially cylindrical 122 in a direction transversal to the plate 123 and thus substantially parallel to the axis X of the cylindrical portion 103 of the bell 102, where the pawl 122 extends from the plate 123 so as to be positioned above the outer surface 111 of said cylindrical portion 103. Elastic back-pulling means, e.g. a spring, are interposed between the plate 123 and the half-pulley 107, where the switch by rotation of the element 120 in a first rotation direction towards the outside and thus with the pawl 122 away from the surface 111 occurs against the elastic bias applied by the spring, while the switch for rotation of the element 120 in a second rotation direction opposite to the first one, in particular towards the inside and thus with the pawl 122 approaching towards the surface 111 is promoted by the elastic reaction of the spring itself.

The operation of the system according to the embodiment of the present invention described above can be summarized as follows.

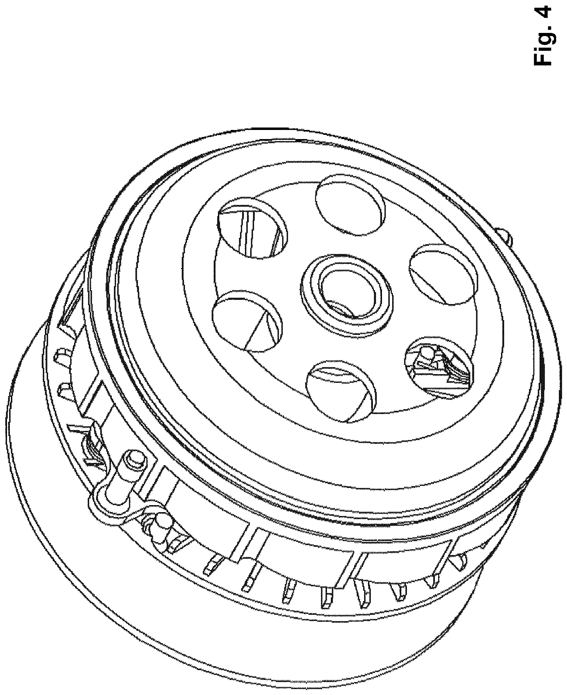

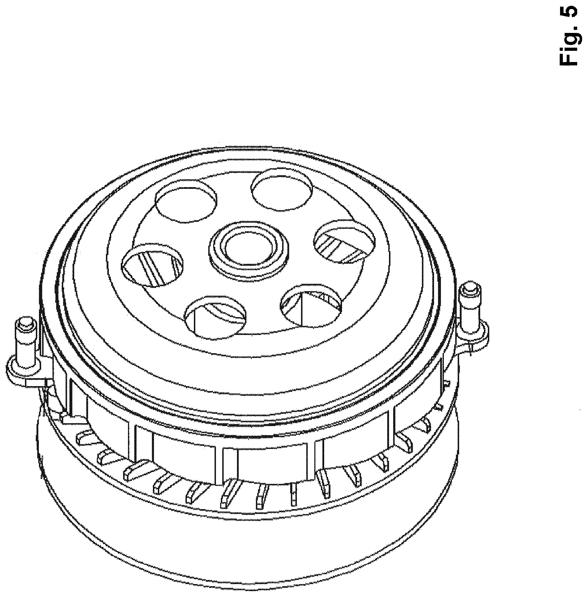

Figure 2 shows a first configuration in which each one of the pawls 122, by virtue of the action of the respective spring, is pushed against the surface 111 and engages a corresponding depression 112, being in particular housed in the concavity C1 of the depression itself. In this configuration, a possible rotation of the bell 102 in the rotation direction A shown in figure 2 results into dragging into rotation the driven pulley 105. So, assuming a situation in which the engine is off, and thus a situation in which the pads inside the bell 102 are in the retracted position and so the bell 102 is released from the cap (so that any rotation of the bell 102 would not result in rotation of the driven pulley 105), this is why, on the contrary, by virtue of the engagement of the elements 120 on the surface 111 of the bell 102, the rotation of the bell 102 results in the rotation respectively of the pulley 105, of the driving pulley, and thus of the drive shaft, whereby allowing starting the engine itself, if, for example, the rotation of the bell 102 is caused by pushing the vehicle. On the other hand, the configuration in figure 2, does not hinder the normal operation of the vehicle, in particular of the transmission of the vehicle itself, in any manner. Indeed, assuming that the pulley 105 is put into rotation in rotation direction A by starting the engine and then through the transmission (drive pulley, belt etc.), the rotation of the half-pulley 107 in the rotation direction A results in putting into rotation the bell 102 in an entirely normal manner, in the moment of the coupling between the bell 102 and the half-pulley 107 deriving from the expansion of the shoes housed inside the bell 102 and thus by virtue of the dragging action applied by the shoes on the inner surface of the cylindrical portion 103 of the bell 102, instead of by the action of the engagement elements 120 on the bell. Indeed, on the contrary, the pawls 122 are switched to the disengagement configuration (Figures 4 and 5) as a result of both the thrust action applied on each pawl 122 of the assembly C2 of the respective depression 122 and of the centrifugal force, where the pawls 122 thus are rotated away from the outer surface 111 and thus disengaged from the respective depressions 122.

A further possibility of use of the system according to the present invention can finally be summarized as follows.

Assuming the driven pulley 105 is put into rotation in the rotation direction opposite to the rotation direction A shown in figure 2, e.g. when the engine is off or running at a very slow speed, either close to or lower than idling speed (and thus in disengagement condition between bell 102 and pads inside it, being the pads in retracted position), and for example by applying the drive force generated by the alternator to the drive shaft, on the contrary, and again by virtue of the engagement of the pawls 122 in the respective depressions 112, the bell 102 is also dragged into rotation in the rotation direction opposite to the rotation direction A, where the hub applied to the bell 102 and the wheel are thus put into rotation in the rotation direction contrary to the forward travel rotation direction, thus allowing to reverse the vehicle, precisely by exploiting the contrary rotation on the drive shaft, for instance. We have thus demonstrated by means of the detailed description of the embodiments of the present invention shown in the drawings given above that the present invention achieves the predetermined objects by overcoming the drawbacks found in the prior art.

In particular, the present invention provides a solution which allows both reversing the vehicle with engine off or running at a very slow rpm, close to idling, and/or push-starting the engine, e.g. in case of flat battery and/or of fault in the electrical system. According to the present invention, moreover, the aforesaid objects are achieved by using a limited number of component parts of simple construction which can be manufactured at a low cost.

Although the present invention is explained above by means of a detailed description of the embodiments shown in the drawings, the present invention is not limited to the embodiments described above and shown in the drawings. On the contrary, all modifications and/or variants of the embodiments described which will appear obvious and immediate to those skilled in the art, are included in the scope of the present invention.

The scope of the present invention is thus defined by the claims.

## Claims

1. A clutch, in particular for motorcycles, said clutch comprising a bell (102) adapted to be engaged and disengaged alternatively by a rotating transmission component (107), wherein the mutual engagement of said bell (102) and said rotating transmission component (107) by means of centrifugal sliding blocks results in said bell (102) by dragged in rotation by said transmission component (107) in a first rotation direction (A), wherein said bell (102) defines an engagement profile formed so as to be engaged and disengaged alternatively by second engagement means (120) dragged in rotation by said transmission component (107), and wherein the mutual engagement of said second engagement means (120) and said engagement profile arises as a result of both the rotation of said transmission component (107) in a second rotation direction, opposite to said first rotation direction (A), and the rotation of said bell (102) in said first rotation direction (A), whereas the mutual disengagement of said engagement means (120) and said engagement profile arises as a result of both the rotation of said transmission component (107) in said first rotation direction (A) opposite to said second rotation direction, and the rotation of said bell (102) in said second rotation direction;
**characterised in that** said bell (102) comprises a substantially cylindrical portion (103), **and in that** said engagement profile is defined by at least one portion of the outer surface (111) of said substantially cylindrical portion (103).

2. The clutch according to claim 1, **characterised in that** said at least one substantially cylindrical portion (103) of said bell (102) comprises at least one depression (112) with respect to a substantially cylindrical reference surface (110), said depression (112) being subtended by a predefined angular sector (α) centred on the longitudinal axis (X) of said substantially cylindrical portion (103).

3. The clutch according to claim 2, **characterised in that** the outer surface (111) of said at least one depression (112) is the locus of the generatrix half-lines substantially parallel to the longitudinal axis (X) of said substantially cylindrical portion (103).

4. The clutch according to any one of the previous claims 2 and 3 **characterised in that** the distance of said generatrix half-lines from said longitudinal axis (X) of said substantially cylindrical portion (103) varies within said angular sector (α).

5. The clutch according to claim 4, **characterised in that** the distance of said generatrix half-lines from said longitudinal axis (X) of said substantially cylindrical portion (103) varies continuously within said angular sector (α).

6. The clutch according to claim 4 or 5, **characterised in that** said angular sector (α) comprises a first subsector (α1) and a second subsector (α2), **and in that** in the first subsector (α1) the curve defined by the intersection between a plane perpendicular to the longitudinal axis (X) of said substantially cylindrical portion (103) and the external surface (111) of said at least one depression (112) comprises at least one concavity (C1) faced towards said cylindrical reference surface (110).

7. The clutch according to claim 6, **characterised in that** in said second subsector (α2) the curve defined by the intersection between a plane perpendicular to the longitudinal axis (X) of said substantially cylindrical portion (103) and said outer surface (111) of said at least one depression (112) comprises at least one convexity (C2) faced towards said cylindrical reference surface (110).

8. The clutch according to claim 7, **characterised in that** said at least one concavity (C1) and at least one convexity (C2) are connected in a continuous manner.

9. A transmission system (100), in particular for motorcycles, said system comprises a rotating transmission component (107), centrifugal sliding blocks and second engagement means (120) and a bell (102) adapted to be engaged and disengaged alternatively by said rotating transmission component (107), wherein the mutual engagement of said bell (102) and said rotating transmission component (107) by means of centrifugal sliding blocks, results in said bell (102) being dragged in rotation by said transmission component (107) in a first rotation direction (A), **characterised in that** said bell (102) is a bell according to one of the claims from 1 to 8, and therefore **in that** the mutual engagement of said second engagement means (120) and said engagement profile arises as a result of both the rotation of said transmission component (107) in a second rotation direction opposite to the said first rotation direction (A), and the rotation of said bell (102) in said first rotation direction (A), whereas the mutual disengagement of said second engagement means (120) and said engagement profile arises as a result of both the rotation of said transmission component (107) in said first rotation direction (A), opposite to said second rotation direction, and the rotation of the bell (102) in said second rotation direction, **in that** said bell (102) comprises a substantially cylindrical portion (103), **and in that** said engagement profile is defined by at least one portion of the outer surface (111) of said substantially cylindrical portion (103).

10. The transmission system (100) according to claim 9, **characterised in that** said transmission component (107) comprises a first pulley positioned outside of said bell (102), **and in that** said second engagement means (120) comprises at least one pawl (122) fixed to said first pulley and adapted to be switched between a first engagement position wherein it engages said at least one depression (112) and a second disengagement position in which it is disengaged from said at least one depression (112), **and in that** the switching of said at least one pawl (122) from said first engagement position to said disengagement position arises as a result of both the rotation of said first pulley in said first rotation direction (A), and the rotation of said bell (102) in said second rotation direction.

11. The transmission system (100) according to claim 10, **characterised in that** said at least one pawl (122) is constrained to said first pulley so that it can be switched by rotation, and **in that** both the rotation of said first pulley (102) in said first rotation direction (A), and the rotation of said bell (102) in said second rotation direction, result in said at least one pawl (122) being rotated in a first own rotation direction and therefore in being switched from said first engagement position to said second engagement position.

12. The transmission system (100) according to claim 11, **characterised in that** said system comprises first elastic means interposed between said pulley and said at least one pawl (122), **and in that** said at least one pawl (122) is switched by rotation from said engagement position to said second disengagement position against the elastic resistance exerted by said first elastic means, whereas said at least one pawl (122) is switched by rotation from said second engagement position to said first engagement position due to the thrusting action exerted by said first elastic means.

13. The transmission system (100) according to one of the claims from 9 to 12, **characterised in that** said rotating transmission component (107) comprises a second pulley or cap equipped with said first engagement means, said centrifugal sliding blocks comprising a plurality of back-pushing and/or engaging shoes at least partially housed inside said bell (102), **in that** each of said shoes is adapted to be translated along a radial direction, and **in that** the rotation of said rotating component (107) in said first rotation direction (A) results in said shoes being radially translated, and therefore in the mutual engagement of said second pulley or distributor cap and said bell (102), and therefore in said bell (102) being dragged in rotation by said rotating transmission component (107).

14. The transmission system (100) according to one of the claims from 9 to 13, **characterised in that** said system comprises a continuously variable transmission (CVT), **and in that** said rotating transmission component (107) belongs to the driven rotating component of said continuously variable transmission.

## Patentansprüche

1. Kupplung, insbesondere für Motorräder, wobei die Kupplung eine Glocke (102) umfasst, die angepasst ist, durch eine rotierende Getriebekomponente (107) abwechselnd in Eingriff genommen und außer Eingriff gebracht zu werden, wobei der gegenseitige Eingriff der Glocke (102) und der rotierenden Getriebekomponente (107) mittels Fliehkraftgleitsteinen darin resultiert, dass die Glocke (102) durch die Getriebekomponente (107) in einer ersten Drehrichtung (A) in Drehung versetzt wird, wobei die Glocke (102) ein Eingriffsprofil definiert, das so ausgebildet ist, dass es abwechselnd durch zweite Eingriffsmittel (120) in Eingriff genommen und außer Eingriff gebracht wird, die durch die Getriebekomponente (107) in Drehung versetzt werden, und wobei sich der gegenseitige Eingriff der zweiten Eingriffsmittel (120) und des Eingriffsprofils als ein Ergebnis sowohl der Drehung der Getriebekomponente (107) in einer zweiten Drehrichtung entgegengesetzt zu der ersten Drehrichtung (A) als auch der Drehung der Glocke (102) in der ersten Drehrichtung (A) ergibt, wobei sich das gegenseitige Außereingriffbringen der Eingriffsmittel (120) und des Eingriffsprofils als ein Ergebnis sowohl der Drehung der Getriebekomponente (107) in der ersten Drehrichtung (A) entgegengesetzt zu der zweiten Drehrichtung als auch der Drehung der Glocke (102) in der zweiten Drehrichtung ergibt;
**dadurch gekennzeichnet, dass** die Glocke (102) einen im Wesentlichen zylindrischen Abschnitt (103) umfasst, **und dass** das Eingriffsprofil durch zumindest einen Abschnitt der äußeren Fläche bzw. Oberfläche (111) des im Wesentlichen zylindrischen Abschnitts (103) definiert ist.

2. Kupplung nach Anspruch 1, **dadurch gekennzeichnet, dass** der zumindest eine im Wesentlichen zylindrische Abschnitt (103) der Glocke (102) zumindest eine Vertiefung (112) in Bezug auf eine im Wesentlichen zylindrische Bezugsfläche bzw. -oberfläche (110) umfasst, wobei die Vertiefung (112) unter einem vordefinierten Winkelsektor (α) ist bzw. durch einen vordefinierten Winkelsektor (α) eingeschlossen ist, der auf der Längsachse (X) des im Wesentlichen zylindrischen Abschnitts (103) zentriert ist.

3. Kupplung nach Anspruch 2, **dadurch gekennzeichnet, dass** die äußere Fläche (111) der zumindest einen Vertiefung (112) der Ort der Erzeugenden-Halblinien im Wesentlichen parallel zu der Längsachse (X) des im Wesentlichen zylindrischen Abschnitts (103) ist.

4. Kupplung nach einem der vorhergehenden Ansprüche 2 und 3, **dadurch gekennzeichnet, dass** der Abstand der Erzeugenden-Halblinien von der Längsachse (X) des im Wesentlichen zylindrischen Abschnitts (103) innerhalb des Winkelsektors (α) variiert.

5. Kupplung nach Anspruch 4, **dadurch gekennzeichnet, dass** der Abstand der Erzeugenden-Halblinien von der Längsachse (X) des im Wesentlichen zylindrischen Abschnitts (103) innerhalb des Winkelsektors (α) kontinuierlich variiert.

6. Kupplung nach Anspruch 4 oder 5, **dadurch gekennzeichnet, dass** der Winkelsektor (α) einen ersten Unter- bzw. Teilsektor (α1) und einen zweiten Unter- bzw. Teilsektor (a2) umfasst, **und dass** in dem ersten Teilsektor (α1) die Kurve, die durch den Schnittpunkt zwischen einer Ebene senkrecht zu der Längsachse (X) des im Wesentlichen zylindrischen Abschnitts (103) und der äußeren Fläche (111) der zumindest einen Vertiefung (112) definiert ist, zumindest eine Konkavität (C1) umfasst, die der zylindrischen Bezugsfläche (110) zugewandt ist.

7. Kupplung nach Anspruch 6, **dadurch gekennzeichnet, dass** in dem zweiten Teilsektor (a2) die Kurve, die durch den Schnittpunkt zwischen einer Ebene senkrecht zu der Längsachse (X) des im Wesentlichen zylindrischen Abschnitts (103) und der äußeren Fläche (11) der zumindest einen Vertiefung (112) definiert ist, zumindest eine Konvexität (C2) umfasst, die der zylindrischen Bezugsfläche (110) zugewandt ist.

8. Kupplung nach Anspruch 7, **dadurch gekennzeichnet, dass** die zumindest eine Konkavität (C1) und die zumindest eine Konvexität (C2) durchgehend verbunden sind.

9. Getriebesystem (100), insbesondere für Motorräder, wobei das System eine rotierende Getriebekomponente (107), Fliehkraftgleitblöcke und zweite Eingriffsmittel (120) und eine Glocke (102) umfasst, die angepasst ist, durch die rotierende Getriebekomponente (107) abwechselnd in Eingriff genommen und außer Eingriff gebracht zu werden, wobei der gegenseitige Eingriff der Glocke (102) und der rotierenden Getriebekomponente (107) mittels Fliehkraftgleitsteinen darin resultiert, dass die Glocke (102) durch die Getriebekomponente (107) in einer ersten Drehrichtung (A) in Drehung versetzt wird, **dadurch gekennzeichnet, dass** die Glocke (102) eine Glocke nach einem der Ansprüche 1 bis 8 ist **und dass** sich der gegenseitige Eingriff der zweiten Eingriffsmittel (120) und des Eingriffsprofils als ein Ergebnis sowohl der Drehung der Getriebekomponente (107) in einer zweiten Drehrichtung entgegengesetzt zu der ersten Drehrichtung (A) als auch der Drehung der Glocke (102) in der ersten Drehrichtung (A) ergibt, wohingegen sich das gegenseitige Außereingriffbringen der Eingriffsmittel (120) und des Eingriffsprofils als ein Ergebnis sowohl der Drehung der Getriebekomponente (107) in der ersten Drehrichtung (A) entgegengesetzt zu der zweiten Drehrichtung als auch der Drehung der Glocke (102) in der zweiten Drehrichtung ergibt; **dass** die Glocke (102) einen im Wesentlichen zylindrischen Abschnitt (103) umfasst, **und dass** das Eingriffsprofil durch zumindest einen Abschnitt der äußeren Fläche (111) des im Wesentlichen zylindrischer Abschnitt (103) definiert ist.

10. Getriebesystem (100) nach Anspruch 9, **dadurch gekennzeichnet, dass** die Getriebekomponente (107) eine erste Riemenscheibe umfasst, die außerhalb der Glocke (102) positioniert ist, **und dass** die zweiten Eingriffsmittel (120) zumindest eine Sperrklinke (122) umfassen, die an der ersten Riemenscheibe befestigt ist und angepasst ist, zwischen einer ersten Eingriffsposition, in der sie in die zumindest eine Vertiefung (112) eingreift, und einer zweiten Außereingriffsposition umgeschaltet zu werden bzw. zu wechseln, in der sie von der zumindest einen Vertiefung (112) außer Eingriff ist, **und dass** sich das Umschalten bzw. Wechseln der zumindest einen Sperrklinke (122) von der ersten Eingriffsposition in die Außereingriffsposition als ein Ergebnis sowohl der Drehung der ersten Riemenscheibe in der ersten Drehrichtung (A) als auch der Drehung der Glocke (102) in der zweiten Drehrichtung ergibt.

11. Getriebesystem (100) nach Anspruch 10, **dadurch gekennzeichnet, dass** die zumindest eine Sperrklinke (122) auf die erste Riemenscheibe beschränkt ist, so dass sie durch Drehung umgeschaltet werden kann, **und dass** sowohl die Drehung der ersten Riemenscheibe (102) in der ersten Drehrichtung (A) als auch die Drehung der Glocke (102) in der zweiten Drehrichtung dazu führen, dass die zumindest eine Sperrklinke (122) in einer ersten eigenen Drehrichtung gedreht wird und daher von der ersten Eingriffsposition in die zweite Eingriffsposition umgeschaltet wird.

12. Übertragungssystem (100) nach Anspruch 11, **dadurch gekennzeichnet, dass** das System erste elastische Mittel umfasst, die zwischen der Riemenscheibe und der zumindest einen Sperrklinke (122) angeordnet sind, **und dass** die zumindest eine Sperrklinke (122) durch Drehung von der Eingriffsposition in die zweite Außereingriffsposition gegen den elastischen Widerstand, der von den ersten elastischen Mitteln ausgeübt wird, umgeschaltet wird, wohingegen die zumindest eine Sperrklinke (122) durch Drehung von der zweiten Eingriffsposition in die erste Eingriffsposition aufgrund der durch die ersten elastischen Mittel ausgeübten Schubwirkung umgeschaltet wird.

13. Getriebesystem (100) nach einem der Ansprüche 9 bis 12, **dadurch gekennzeichnet, dass** die rotierende Getriebekomponente (107) eine zweite Riemenscheibe oder Kappe umfasst, die mit den ersten Eingriffsmitteln ausgestattet ist, wobei die Fliehkraftgleitblöcke eine Mehrzahl zurückdrängender und/oder eingreifender Schuhe umfassen, die zumindest teilweise im Inneren der Glocke (102) untergebracht sind, **dass** jeder der Schuhe angepasst ist, entlang einer radialen Richtung verschoben zu werden, **und dass** die Drehung der rotierenden Komponente (107) in der ersten Drehrichtung (A) in einem radialen Verschieben der Schuhe und daher in dem gegenseitigen Eingriff der zweiten Riemenscheibe oder Verteilerkappe und der Glocke (102) und daher darin resultiert, dass die Glocke (102) durch die rotierende Getriebekomponente (107) in Drehung versetzt wird.

14. Getriebesystem (100) nach einem der Ansprüche 9 bis 13, **dadurch gekennzeichnet, dass** das System ein stufenloses Getriebe (CVT) umfasst **und dass** die rotierende Getriebekomponente (107) zu der angetriebenen rotierenden Komponente des stufenlosen Getriebes gehört.

## Revendications

1. Embrayage, en particulier pour motocyclettes, ledit embrayage comprenant une cloche (102) adaptée pour être engagée et désengagée en alternance par un composant de transmission rotatif (107), dans lequel l'engagement mutuel de ladite cloche (102) et dudit élément de transmission rotatif (107) au moyen de blocs coulissants centrifuges se traduit par le fait que ladite cloche (102) est entraînée en rotation par ledit composant de transmission (107) dans une première direction de rotation (A), dans lequel ladite cloche (102) définit un profil d'engagement formé de manière à être engagé et désengagé en alternance par un second moyen d'engagement (120) entraîné en rotation par ledit composant de transmission (107), et dans lequel l'engagement mutuel dudit second moyen d'engagement (120) et dudit profil d'engagement se produit à la fois suite à la rotation dudit composant de transmission (107) dans une seconde direction de rotation, opposée à la première direction de rotation (A), et à la rotation de ladite cloche (102) dans ladite première direction de rotation (A), tandis que le désengagement mutuel dudit moyen d'engagement (120) et dudit profil d'engagement se produit à la fois suite à la rotation dudit composant de transmission (107) dans ladite direction de rotation (A) opposée à ladite seconde direction de rotation, et à la rotation de ladite cloche (102) dans ladite seconde direction de rotation ;
**caractérisé en ce que** ladite cloche (102) comprend une partie sensiblement cylindrique (103), **et en ce que** ledit profil d'engagement est défini par au moins une partie de la surface extérieure (111) de ladite partie sensiblement cylindrique (103).

2. Embrayage selon la revendication 1, **caractérisé en ce que** ladite au moins une partie sensiblement cylindrique (103) de ladite cloche (102) comprend au moins une dépression (112) par rapport à une surface de référence sensiblement cylindrique (110), ladite dépression (112) étant sous-tendue par un secteur angulaire prédéfini (α) centré sur l'axe longitudinal (X) de ladite partie sensiblement cylindrique (103).

3. Embrayage selon la revendication 2, **caractérisé en ce que** la surface extérieure (111) de ladite au moins une dépression (112) est le lieu des demi-lignes génératrices sensiblement parallèles à l'axe longitudinal (X) de ladite partie sensiblement cylindrique (103).

4. Embrayage selon l'une quelconque des revendications précédentes 2 et 3, **caractérisé en ce que** la distance entre lesdites demi-lignes génératrices et ledit axe longitudinal (X) de ladite partie sensiblement cylindrique (103) varie à l'intérieur dudit secteur angulaire (α).

5. Embrayage selon la revendication 4, **caractérisé en ce que** la distance entre lesdites demi-lignes génératrices et ledit axe longitudinal (X) de ladite partie sensiblement cylindrique (103) varie continuellement à l'intérieur dudit secteur angulaire (α).

6. Embrayage selon la revendication 4 ou 5, **caractérisé en ce que** ledit secteur angulaire (α) comprend un premier sous-secteur (α1) et un deuxième sous-secteur (α2), **et en ce que** dans le premier sous-secteur (α1) la courbe définie par l'intersection entre un plan perpendiculaire à l'axe longitudinal (X) de ladite partie sensiblement cylindrique (103) et la surface externe (111) de ladite au moins une dépression (112) comprend au moins une concavité (C1) orientée vers ladite surface de référence cylindrique (110).

7. Embrayage selon la revendication 6, **caractérisé en ce que** dans le deuxième sous-secteur (α2) la courbe définie par l'intersection entre un plan perpendiculaire à l'axe longitudinal (X) de ladite partie sensiblement cylindrique (103) et la surface extérieure (111) de ladite au moins une dépression (112) comprend au moins une convexité (C2) orientée vers ladite surface de référence cylindrique (110).

8. Embrayage selon la revendication 7, **caractérisé en ce que** lesdites au moins une concavité (C1) et au moins une convexité (C2) sont connectées de manière continue.

9. Système de transmission (100), en particulier pour motocyclettes, ledit système comprenant un composant de transmission rotatif (107), des blocs coulissants centrifuges et un deuxième moyen d'engagement (120) et une cloche (102) adaptée pour être engagée et désengagée en alternance par ledit élément de transmission rotatif (107), dans lequel l'engagement mutuel de ladite cloche (102) et dudit composant de transmission rotatif (107) au moyen des blocs coulissants centrifuges, se traduit par le fait que ladite cloche (102) est entraînée en rotation par ledit composant de transmission (107) dans une première direction de rotation (A), **caractérisé en ce que** ladite cloche (102) est une cloche selon l'une des revendications 1 à 8, et ainsi **en ce que** l'engagement mutuel dudit deuxième moyen d'engagement (120) et dudit profil d'engagement se produit à la fois suite à la rotation dudit composant de transmission (107) dans une seconde direction de rotation opposée à la première direction de rotation (A), et à la rotation de ladite cloche (102) dans ladite première direction de rotation (A), tandis que le désengagement mutuel dudit deuxième moyen d'engagement (120) et dudit profil d'engagement se produit à la fois suite à la rotation dudit composant de transmission (107) dans ladite première direction de rotation (A), opposée à ladite seconde direction de rotation, et à la rotation de ladite cloche (102) dans ladite seconde direction de rotation, **en ce que** ladite cloche (102) comprend une partie sensiblement cylindrique (103), **et en ce que** ledit profil d'engagement est défini par au moins une partie de la surface extérieure (111) de ladite partie sensiblement cylindrique (103).

10. Système de transmission (100) selon la revendication 9, **caractérisé en ce que** ledit composant de transmission (107) comprend une première poulie positionnée à l'extérieur de ladite cloche (102), **et en ce que** ledit deuxième moyen d'engagement (120) comprend au moins un cliquet (122) fixé à ladite première poulie et adapté pour être commuté entre une première position d'engagement dans laquelle il s'engage dans ladite au moins une dépression (112) et une seconde position de désengagement dans laquelle il est désengagé de ladite au moins une dépression (112), **et en ce que** la commutation dudit au moins un cliquet (122) depuis la première position d'engagement vers ladite position de désengagement se produit à la fois suite à la rotation de la première poulie dans ladite première direction de rotation (A), et à la rotation de ladite cloche (102) dans ladite seconde direction de rotation.

11. Système de transmission (100) selon la revendication 10, **caractérisé en ce que** ledit au moins un cliquet (122) est contraint vers ladite première poulie de sorte qu'il peut être commuté par rotation, **et en ce que** à la fois la rotation de la première poulie (102) dans ladite première direction de rotation (A), et la rotation de ladite cloche (102) dans ladite seconde direction de rotation, se traduisent par le fait que ledit au moins un cliquet (122) est mis en rotation dans une première direction de rotation propre et est ainsi commuté depuis la première position d'engagement vers la seconde position d'engagement.

12. Système de transmission (100) selon la revendication 11, **caractérisé en ce que** ledit système comprend un premier moyen élastique interposé entre ladite poulie et ledit au moins un cliquet (122), **et en ce que** ledit au moins un cliquet (122) est commuté par rotation depuis ladite position d'engagement vers ladite seconde position de désengagement contre la résistance élastique exercée par ledit premier moyen élastique, tandis que ledit au moins un cliquet (122) est commuté par rotation depuis ladite seconde position d'engagement vers ladite première position d'engagement en raison de l'action de poussée exercée par ledit premier moyen élastique.

13. Système de transmission (100) selon l'une des revendications 9 à 12, **caractérisé en ce que** ledit composant de transmission rotatif (107) comprend une deuxième poulie ou capuchon équipé dudit premier moyen d'engagement, lesdits blocs coulissants centrifuges comprenant une pluralité de patins d'engagement et/ou de poussée arrière au moins partiellement logés dans ladite cloche (102), **en ce que** chacun desdits patins est adapté pour subir une translation le long d'une direction radiale, et **en ce que** la rotation dudit composant rotatif (107) dans ladite première direction de rotation (A) résulte **en ce que** lesdits patins subissent une translation radiale, et ainsi dans l'engagement mutuel de ladite deuxième poulie ou capuchon de distributeur et de ladite cloche (102), et ainsi **en ce que** ladite cloche (102) est entraînée en rotation par ledit composant de transmission rotatif (107).

14. Système de transmission (100) selon l'une des revendications 9 à 13, **caractérisé en ce que** ledit système comprend une transmission variable en continu (CVT), **et en ce que** ledit composant de transmission rotatif (107) appartient au composant rotatif entraîné de ladite transmission variable en continu.
